# EUROPEAN PATENT APPLICATION

(11) **EP 1 089 525 A2**
(43) Date of publication of application: **04.04.2001**
(21) Application number: 00120440.3
(22) Date of filing: 19.09.2000
(51) Int. Cl.: H04M 1/02

(54) **A telephone**

(30) Priority: 28.09.1999 IT TO990831
(71) Applicant: TECDIS S.p.A., 11024 Chatillon (Aosta) (IT)
(72) Inventor: Colle, Giuseppe, 11024 Donnas (Aosta) (IT)
(74) Representative: Gerbino, Angelo

(57) **Abstract**

The telephone comprises a body (10), a display (12), and a keyboard with a plurality of keys (18). The keyboard is produced in the form of a panel (16) having a face on which the keys (18) are housed and which is articulated to the body (10) so as to be movable between a folded configuration in which it covers at least a part of the display (12) and the keys (18) are not directly accessible, and an extended configuration in which the keys (18) are directly accessible and the display (12) is visible from the exterior.

## Description

The present invention relates to a telephone comprising a body, a display, and a keyboard with a plurality of keys.

According to a known technique, the display and the keyboard are disposed on juxtaposed portions of a face, typically the upper face, of the telephone body, making the body quite bulky.

The object of the present invention is to provide a telephone which is improved, particularly with regard to a reduction in bulk, in comparison with those of the prior art.

According to the invention, this object is achieved by a telephone having the specific characteristics recited in the appended claims.

The telephone of the invention is compact in the folded configuration, which corresponds to the non-used condition, since the areas occupied by the display and by the keyboard are superimposed.

In this configuration there is also the advantage that both the display and the keyboard are protected, preventing damage thereto and inadvertent pressing of the keys.

On the other hand, in the extended configuration corresponding to the condition of use - in which, however, a normal telephone spends only a small fraction of its time - the display and the keyboard are freely accessible without any additional limitation in comparison with that of a conventional telephone.

According to its size, the panel which acts as the keyboard may be able to cover the entire display or only a part of the display, in its folded condition. In the latter case, it is thus possible to view the part of the display which is left exposed, for example, the part which is intended to display messages relating to functions of a more strictly telephonic nature.

In a preferred embodiment of the invention, the panel which acts as a keyboard has a portion which is made of transparent material so that the part of the display which is covered by the transparent portion also remains visible when the panel is in the folded configuration. The advantages offered by complete protection of the display are thus combined with those offered by an unobstructed view of a part thereof.

Further advantages and characteristics of the present invention will become clear from the following detailed description, provided by way of non-limiting example with reference to the appended drawings, in which:
Figure 1 is a perspective view of a telephone according to the invention,
Figure 2 is a side elevational view of the telephone of Figure 1 in a different configuration of use,
Figure 3 is a plan view of the telephone in the configuration of Figure 2, and
Figure 4 is a view of a detail of the telephone of the previous drawings.

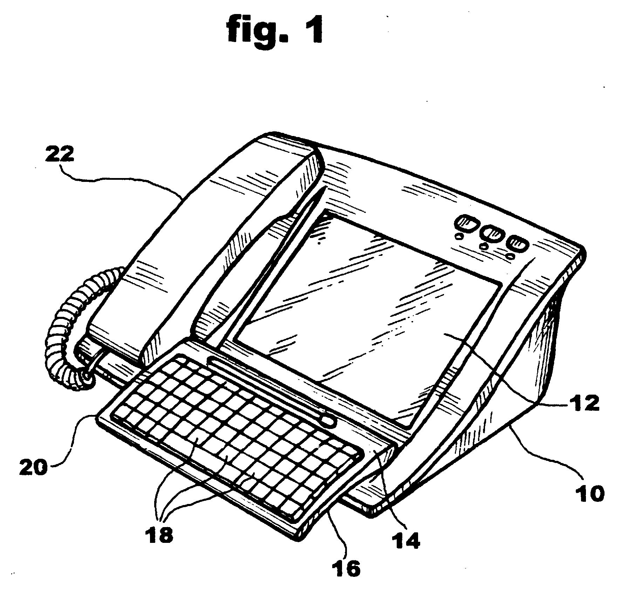

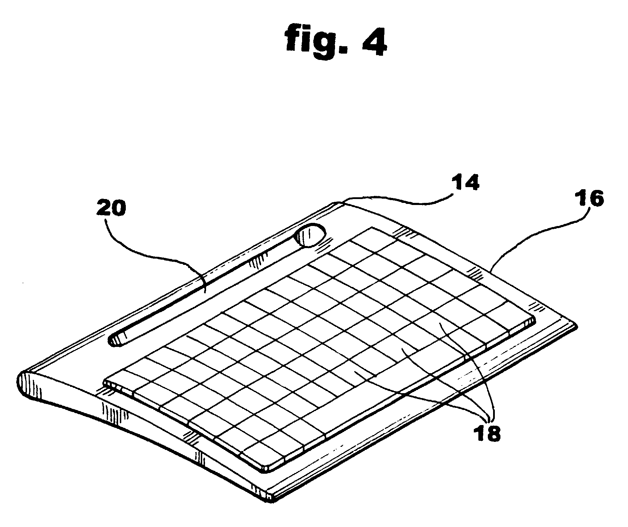

A telephone comprises (Figure 1) a body 10 housing a display 12 on its upper face. A panel 16, substantially rectangular in plan, is articulated, along one side 14 thereof, to such upper face. A plurality of keys 18 are housed on a main face of the panel 16 (Figure 4) which thus has the function of a keyboard. This face also has an elongate recess 20 for use as a storage compartment, in particular, a pen-holder.

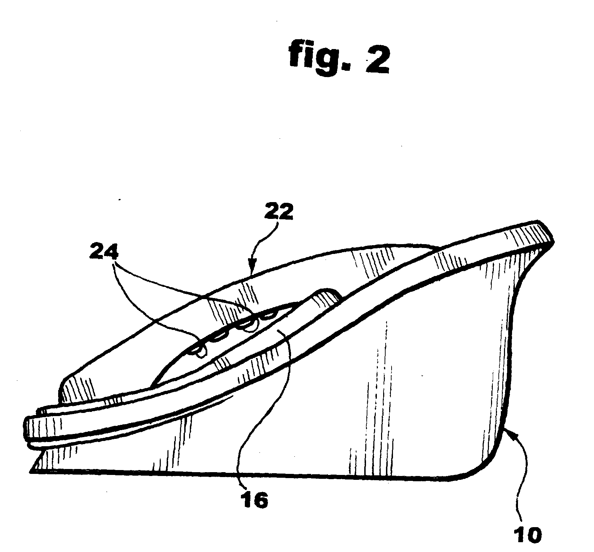

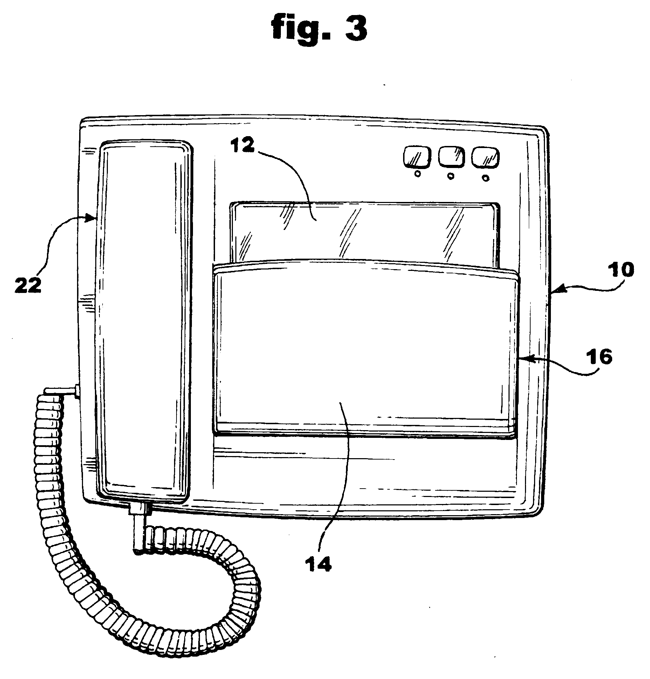

The panel 16 which acts as a keyboard is movable between a folded configuration (Figures 2 and 3) in which it covers the lower part of the display 12 and the keys 18 are not directly accessible, and an extended configuration (Figure 1) in which the keys 18 are directly accessible and the whole of the display 12 is visible from the exterior.

The change between one configuration and the other takes place as a result of a pivoting of the panel 16 through almost 180° about its side 14 which is articulated to the body 10. The structural details of this articulation - for example, pins which project from the side of the panel 16 and are fitted in seats of complementary shape in the body 10 or *vice versa* - are known *per se* to experts in the art and are therefore not described further. Similarly, the techniques used for the arrangement of the wires for the electrical supply of the panel 16 are conventional and not crucial with respect to the present invention and are therefore not described in detail.

The telephone also has, in known manner, a handset 22 which preferably has its own keypad 24 (Figure 2) for strictly telephonic functions, whereas the keyboard of the panel 16 can perform more complex functions, for example, Internet connection and the like. When a further keypad 24 is provided, the purely telephonic functionality of the telephone is ensured, even when the panel 16 is in the folded configuration.

Naturally, the principle of the invention remaining the same, the details of construction and forms of embodiment may be varied widely with respect to those described purely by way of example, without thereby departing from its scope.

## Claims

1. A telephone comprising a body (10), a display (12), and a keyboard with a plurality of keys (18), the telephone being characterized in that the keyboard is produced in the form of a panel (16) having a face on which the keys (18) are housed and which is articulated to the body (10) so as to be movable between a folded configuration in which the panel (16) covers at least a part of the display (12) and the keys (18) are not directly accessible, and an extended configuration in which the keys (18) are directly accessible and the display (12) is visible from the exterior.

2. A telephone according to Claim 1, characterized in that the panel (16) has dimensions such that it can cover the display (12) completely in the folded configuration.

3. A telephone according to Claim 2, characterized in that a portion of the panel (16) is made of transparent material so that the part of the display (12) which is covered by the said portion remains visible, even when the panel (16) is in the folded configuration.
